## Europäisches Patentamt
## European Patent Office
## Office européen des brevets

(11) Numéro de publication: **0 043 885**

**A1**

(12) # DEMANDE DE BREVET EUROPEEN

(21) Numéro de dépôt: **80830057.8**

(22) Date de dépôt: **15.07.80**

(51) Int. Cl.³: **H 02 K 47/00**
**H 02 K 25/00, H 02 K 53/00**

(43) Date de publication de la demande:
**20.01.82 Bulletin 82/3**

(84) Etats contractants désignés:
**AT BE CH DE FR GB IT LI LU NL SE**

(71) Demandeur: **Gherardi, Mario**
**Via Statale Selice, 24**
**I-40026 Imola Bologna(IT)**

(72) Inventeur: **Gherardi, Mario**
**Via Statale Selice, 24**
**I-40026 Imola Bologna(IT)**

(74) Mandataire: **Sassatelli, Franco**
**inip - Information Network of Intellectual Properties Via**
**Mazzini, 170**
**I-40139 Bologna(IT)**

(54) **Moteur générateur de courant électrique.**

(57) Un couple de bobines (1, 2) est employé avec aimant permanent (3) interposé sur arbre (5) supporté à chassis (4), sur couple de roulements (6, 7) et, dans la partie supérieure, équipé avec contacteurs disjoncteurs (8) à balais tournants (9, 10) à secteurs annulaires et profil de contact, aux deux balais glissants (14, 15) connectés aux dites bobines (1, 2) de partie fixe, avec parties d'interruption contreposées. Moyennant les dits balais tournants (9, 10) le courant pris d'un distributeur (13) et par des conduits intérieurs (11, 12) du contacteur disjoncteur (8), parvient aux deux balais glissants (14, 15) et cependant aux bobines (1, 2) déterminant une fréquence magnétique qui met en rotation l'aimant permanent (3) et donc le corps de rotation.

Lorsque les balais glissants (14, 15) se trouvent sur les parties d'interruption du profil de contact, le passage du courant est interrompu pour un instant et, pendant que le corps de rotation poursuit son mouvement, passant la phase critique par inertie, une inversion de polarisation est générée dans le flux magnétique opérant un effet ultérieur de rotation. Le distributeur (13) peut etre intégré à nouveau avec la quantité minime d'énergie cédée pour le démarrage au moyen de dérivations de bobines de régénération (16, 17). L'appareil peut etre employé pour universalité d'utilisation: pour produire énergie sous tension, ou bien pour être emploié comme groupe moteur.

FIG. 1

- 1 -

## Moteur générateur de courant électique:

L'invention se réfère à un dispositif de rotation qu'on peut mettre en marche moyennant effet initial de couple, possible avec un prélèvement minime d'energie sous tension d'un distributeur conventionnel, et qui poursuit son mouvement par des inversions successives de polarisation du flux magnétique opérant avec cycle continu comme activateur du mouvement.

En voie principale, le trouvé peut etre utilisé comme générateur de courant électrique ou bien comme groupe moteur. Substantiellement, le dispositif prévoit un couple de bobines solidaires sur chassis de partie fixe, positionnées en parallèle et équipées, selon conduits, avec un couple de balais glissants qui sont posés sur portions contreposées du profil tournant de contact à base circulaire de contacteur disjoncteur interposé. Le dit profil de contact présente des parties contreposées d'interruption pour permettre l'inversion du flux magnétique. La partie tournante prévoit un arbre stabilisé à rotation sur chassis au moyen d'un couple de roulements et portant solidaire l'aimant permanent qui occupe l'interspace entre les deux bobines de partie fixe.

Pour obtenir l'effet de couple de rotation, apte pour dé marrer la partie tournante, une quantité minime d'énergie est employée sous tension, à prélever d'un distributeur conventionnel, tel que: battérie, pile ou réseau d'alimentation. L'alimentation est consentie à travers de conduits intérieurs dans le contacteur disjoncteur qui transmettente le courant de balais tournants à des secteurs annulaires, aux balais glissants et ensuite aux bobines de la partie fixe, déterminant une fréquence magnétique qui met en rotation, au moyen de l'aimant mermanent, le complexe tournant. Lorsque les contacts sur le profil s'interrompent puisque les balais glissants se trouvent sur les points d'interruption, l'alimentation de courant cesse et, tandis que le corps de rotation poursuit son mouvement, supérant la phase critique par inertie, une inversion de polarisation est générée dans le flux magnétique, agissant un effet d'impulsion ultérieur pour la prosécution de la rotation.

De cette façon, on détermine par des phases successives de polarisation un mouvement rotatif constant et à cycle continu. Pour élever la puissance, la possibilité a été prévue d'ajouter au couple de bobines, un autre ou plusieurs couples de bobines en série ou bien en parallèle, qui opèrent comme autant de pôles magnétiques permanents, élévant ainsi le nombre des effets d'impulsion au mouvement. Cela est consenti en employant un profil de contact prévoyant autant de couples de points d'interruption qu' en sont les couples des dites bobines.

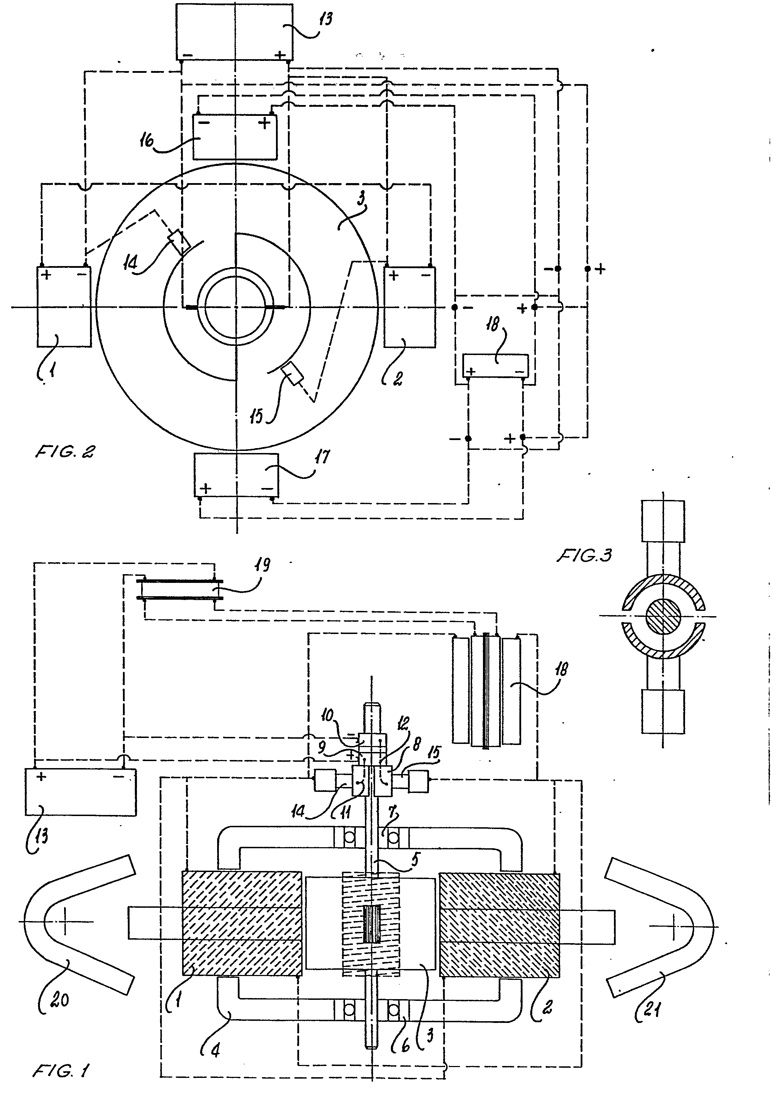

Une version élementérisée du trouvé est illustrée aux croquis de-la Table 1, où la Fig. 1 est la vue schématique du haut pour mettre en évidence la couple de bobines du système base en parallèle stabilisé sur chassis de partie fixe et avec, y interposé, le complexe tournant portant le contacteur disjoncteur, aussi bien qu'avec, en évidence, les balais glissants posés sur parties contreposées du profil de contact. Le schéma prévoit des connexions avec deux bobines de régénération alimentant un moteur électrique pour mettre en évidence une possible version d'emploi du trouvé. La Fig. 3 est la section du contacteur disjoncteur pour mettre en évidence les mi-annulaires des balais tournants et le profil de contact des balais glissants.

En version schématique non limitative, les bobines de base 1 et 2 sont prévues en parallèle, varables de 2000 à 3000 Ampères-Spires, et avec interposé l'aimant permanent 3. Les dites bobines sont supportées sur chassis antimagnétique 4 permettant l'articulation tournant de l'aimant permanent, au moyen de support de l'arbre antimagnétique 5 solidaire selon le couple de roulements d'imposition 6 et 7. Cet arbre porte solidaire le contacteur-disjoncteur 8 équipé avec balais tournants 9 et 10, et avec connexions 11 et 12 au profil de contact pour l'alimentation des bobines 1 et 2, avec courant provenant de la batterie 13 jusqu'au détachement du contact qui se détermine lorsque les balais glissants 14 et 15 parviennent sur les points d'interruption.

Au débout, l'alimentation sur les dites bobine génère une fréquence magnétique qui mette en rotation l'aimant. Lorsque les balais glissants se trouvent sur les points d'interruption, le contact de conduction manque pour un instant

- 4 -

sur les bobines 1 et 2, et cela cause l'interruption du flux magnétique générant une inversion de polarisation sur les bobines, agissant ainsi comme une impulsion ultérieure de rotation de l'aimant permanent.

En version, le courant provenant de l'aimant 3 par les deux bobines 16 et 17 est porté sur le régénérateur de courant continu 18 et envoyé au redresseur 19 et enfin à la batterie 13 d'alimentation initiale afin de permettre la réintégration de charge, alors qu'un autre conduit est utilisé pour le prélèvement du courant pour universalité d'emploi.

En version, pour le renforcement du flux magnétique et le blocage des bobines 1 et 2, les aimants 20 et 21 sont prévus. En partieculier, l'aimant permanent 3 pourra etre réalisé en un ou plusieurs éléments, tandis que les connexions pourront etre différemment exécutées. En pratique, les particulaires d'exécution, la disposition de base de l'appareil, le nombre des composants et les formes d'utilisation pourront etre prévus de différents façons.

- 5 -

Revendications:

1) Moteur générateur de courant électrique, caractérisé par le fait qu'il prévoit, solidaire sur chassis, couple de bobines de partie fixe, positionnées en parallèle et équipées, selon le conducteur, avec couple de balais glissants qui restent sur des points contreposés du profil tournant à base circulaire du contacteur disjoncteur interposé. Ce profil de contact présente des points d'interruption contreposés afin de permettre l'inversion du flux magnétique. La partie tournante prévoit un arbre stabilisé à rotation sur le chassis au moyen d'un couple de roulement et portante, solidaire, l'aimant permanent qui occupe l'interspace entre les deux bobines de partie fixe. Pour obtenir l'effet de couple, apte pour mettre en marche la partie tournante, une quantité minime d'énergie est employée sous tension, qu'on peut préléver d'un distributeur conventionnel, tel que, p.e.: batterie, pile ou bien réseau électrique. L'alimentation est possibile moyennant des conduits séparés intérieurs dans le contacteur disjoncteur qui transmettent le courant, des balais tournants à secteurs annulaires, aux balais glissants et ensuite aux bobines de partie fixe, déterminant une fréquence magnétique qui met en rotation le complexe tournant au moyen de l'aimant permanent.

2) Moteur générateur de courant électrique, selon la reventication précédente, caractérisé par le fait que, lorsque les contacts sur profil s'interrompent parce que les balais glissants arrivent sur les points d'interruption, l'alimentation de courant cesse et, tandis que le corps de rotation poursuit le mouvement et supère la phase cri tique par inertie, une inversion de polarisation est générée, dans le fluxe magnétique, qui agit comme effet ul
térieur d'impulsion pour continuer la rotation. De cette
façon, un mouvement rotatif constant, à cycle continu, se
produit par des phases successives d'inversion de polari
sation.

3) Moteur générateur de courant électrique, selon les re
vendication précédentes, caractérisé par le fait que, afin d'élever la puissance, la possibilité a été prévue
d'ajouter au couple de bobines du système base, autre ou
plusieurs couples de bobines en série ou en parallèle,
qui opèrent comme autant de pôles magnétiques permanents,
de façon d'élever le nombre des effets d'impulsion au mou
vement. Cela est consenti par l'emploi d'un profil de con
tact prévoyant autant de couples de points d'interruption
que les couples des dites bobines.

4) Moteur générateur de courant électrique, selon les re
vendications précédentes, caractérisé par le fait que, en
version schématique non limitative, les bobines de base
1 et 2 en parallèle sont prévues variables de 2000 à 3000
Ampères-Spires et avec interposé l'aimant permanent 3.
Les dites bobines sont supportées sur chassis antimagnétique 4 et qui permet l'articulation tournante de l'aimant
permanent, moyennant le support de l'arbre antimagnétique
solidaire, selon le couple de roulements d'imposition 6 et
7. Le dit arbre porte solidaire le contacteur disjoncteur
8 équipé avec balais tournants 9 et 10 et avec les conne
xions 11 et 12 au profil de contact pour l'alimentation
des bobines 1 et 2, avec courant provenant de la batterie 13 jusqu'au détachement du contact, ce qui arrive lorsque les balais glissants 14 et 15 parviennent sur les points d'interruption.

Au début, l'alimentation sur les bobines ci-dessus génère une fréquence magnétique qui met en rotation l'aimant; aussitôt que les balais glissants arrivent sur les points d'interruption, le contact de conduction manque pour un instant sur les bobines 1 et 2, et cela cause l'interruption du flux magnétique qui produit une inversion de polarisation sur les bobines, ce qui génère une impulsion ultérieure de l'aimant mermanent.

5) Moteur générateur de courant électrique, selon les revendications précédentes, caractérisé par le fait que, en version le courant qui provient de l'aimant 3 par les deux bobines 16 et 17 est porté sur le régénérateur de courant continu 18 et envoyé au radresseur 19, et enfin à la batterie 13 d'alimentation initiale afin de consentir la réintégration de charge, alors qu'un autre conduit est utilisé pour préléver du courant à universalité d'emploi.

6) Moteur générateur de courant électrique, selon les revendications précédentes, caractérisé par le fait que, en version, les aimants 20 et 21 sont prévues pour renforcer le flux magnétique et le blocage des bobines 1 et 2.

7) Moteur générateur de courant électrique, selon les revendications précédentes, caractérisé par le fait que, en particulier, l'aimant permanent 3 pourra etre réalisé en un ou bien plusieurs éléments, alors que les connexions

0043885

- 8 -

pourront être effectuées de façons différentes.

FIG. 2

FIG. 3

FIG. 1

Office européen des brevets

**0043885**

Numéro de la demande

**RAPPORT DE RECHERCHE EUROPEENNE**

EP 80 83 0057

## DOCUMENTS CONSIDERES COMME PERTINENTS

| Catégorie | Citation du document avec indication, en cas de besoin, des parties pertinentes | Revendica-tion concernée |
|---|---|---|
| | **DE - C - 850 484** (SIEMENS & HALSKE) | 1-5,7 |
| | * page 1, lignes 13-34; page 2, lignes 1-126; page 3, lignes 1-34; figures 1,2 * | |
| | -- | |
| | **US - A - 3 670 189** (MONROE) | 1-4,6, 7 |
| | * colonne 3, lignes 64-75; colonnes 4-6; colonne 7, lignes 1-65; figures 1-4,6-8, 13-16 * | |
| | -- | |
| | **US - A - 3 786 287** (STEIN) | 1-4 |
| | * colonne 1, lignes 48-68; colonne 2, lignes 1-52; figure 1 * | |
| | -- | |
| | **US - A - 1 859 643** (WORTHINGTON) | 3,6,7 |
| | * page 1, lignes 67-100; page 2, lignes 1-120; page 3, lignes 1-38; figures 1-4 * | |
| | -- | |
| | **FR - A - 709 789** (HENSHALL) | 5 |
| | * page 1, lignes 38-62; page 2, lignes 1-40; figures 1,2 * | |
| | -- | |
| | **FR - A - 2 112 768** (RYS) | 5 |
| | * page 1, lignes 11-14; page 2, lignes 20-31; figure 3 * | |
| | ----------- | |

**CLASSEMENT DE LA DEMANDE (Int. Cl.³)**

H 02 K 47/00
25/00
53/00

**DOMAINES TECHNIQUES RECHERCHES (Int. Cl.³)**

H 02 K 47/04
47/02
47/14
47/12
47/00
25/00
23/62
53/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-02-1981 | TIO |

OEB Form 1503.1   06.78